Europäisches Patentamt

European Patent Office

Office européen des brevets

(11) Publication number: **0 445 867 A1**

# EUROPEAN PATENT APPLICATION

(21) Application number: **91200421.5**

(22) Date of filing: **27.02.91**

(51) Int. Cl.⁵: **A01N 37/44, A01N 59/26**

(30) Priority: **28.02.90 US 487195**

(43) Date of publication of application:
**11.09.91 Bulletin 91/37**

(84) Designated Contracting States:
**BE DE ES FR GR IT NL**

(71) Applicant: **UNIVERSITY OF KENTUCKY RESEARCH FOUNDATION**
**107 Mineral Industries Building, 120 Graham Avenue**
**Lexington, Kentucky 40506-0051(US)**

(72) Inventor: **Kuc, Joseph Andre**
**S-305 Ag. Science Bldg.-North**
**Lexington, Kentucky 40506(US)**

(74) Representative: **Long, Edward Anthony et al**
**Hulse & Co. Cavendish Buildings West Street**
**Sheffield S1 1ZZ(GB)**

(54) Compositions and methods for inducing systemic resistance in plants.

(57) Compositions for inducing systemic resistance in various plant species include an effective amount of an active ingredient selected from a group consisting of mono, di and tri potassium phosphate, mono, di and tri sodium phosphate, calcium phosphate, potassium carbonate, sodium carbonate and calcium chelating compounds, including EDTA and EGTA together with a suitable carrier. A method of inducing systemic resistance in plants by applying the compositions is also disclosed.

Technical Field

The present invention relates generally to plant immunization and, more particularly, to compositions and methods for inducing systemic resistance in plants.

Background of the Invention

Plants have evolved highly effective mechanisms for resistance to disease caused by infectious agents, such as scab, gummy stem blight, powdery mildew, angular leaf spot, bacterial wilt, tobacco necrosis virus and cucumber mosaic virus. It has been found that various factors can modify this plant disease resistance. Some factors include the utilization of fertilizers and pesticides, the presence or absence of sufficient irrigation, sequential cropping, the appearance of new virulent races of pathogens and environmental stress.

Recent studies have indicated that the susceptibility of plants to certain diseases is not synonymous with the absence of the genetic potential for resistance mechanisms to those diseases. In fact, it has been found that resistance can be systemically induced in apparently susceptible plants by inoculation with avirulent forms of pathogens, hypovirulent pathogens and nonpathogens or by restricted inoculation with pathogens. The resulting induced resistance is persistent and generally non-specific for a pathogen. Relatively recently is has even been found that systemic resistance may be induced by simple chemical substances such as oxalate, glyoxylate and ascorbate.

It appears that induced systemic resistance depends upon a gradual expression and persistence of a low level of metabolic perturbation. Unlike elicitors of phytoalexin accumulation, which elicit at the site of application and may be responsible for localized protection, inducers of systemic resistance sensitize the plant as a whole to respond rapidly after infections. These responses include phytoalexin accumulation and lignification and enhanced activities of chitinase and -glucanase.

Summary of the Invention

It is accordingly, one object of the present invention to provide simple chemical compositions that are relatively inexpensive to prepare for inducing systemic resistance in plants.

A further object of the present invention is to provide safe and effective compositions and methods of inducing systemic resistance in plants.

Other objects and advantages of the present invention will become apparent as the description thereof proceeds.

In satisfaction of the foregoing objects and advantages, there is provided by this invention compositions for inducing systemic resistance in plants, such as cucumbers and other curcurbits including watermelons and muskmelons. The compositions have also proven effective in reducing systemic resistance in other vegetable varieties including green bean, potato and tomato species, as well as in various tobacco plant species. The compositions will also broadly induce systemic resistance in still other plant varieties and species.

Also provided are methods of inducing systemic resistance in plants. Together the compositions and methods may be used in agricultural or related fields preventively and curatively for controlling a broad range of plant diseases including phytopathogenic microorganisms (mildews, fungi and viruses). The compositions and methods are well tolerated by plants. They are also particularly effective in treating and preventing outbreaks of anthracnose (Colletotrichum lagenarium), scab (Cladosporium cucumerinum) gummy stem blight (Mycospaerella melonis), powdery mildew (Sphaerotheca fuliginea), angular leaf spot (Pseudomonas lachrymans), bacterial wilt (Erwinia tracheiphila), tobacco necrosis virus and cucumber mosaic virus.

Detailed Description of the Invention

It has been found that certain compositions may be utilized to induce systemic resistance in plants. These compositions contain as an active ingredient an effective amount of at least one compound selected from a group including mono, di and tri potassium phosphate ($KH_2PO_4$; $K_2HPO_4$; $K_3PO_4$), mono, di and tri sodium phosphate ($NaH_2PO_4$; $Na_2HPO_4$; $Na_3PO_4$), calcium phosphate ($CaHPO_4$), potassium carbonate ($K_2CO_3$), sodium carbonate ($Na_2CO_3$), and calcium chelating compounds including edetic acid (EDTA, $C_{10}H_{16}N_2O_8$) and ethylenebis (oxyethylenenitrilo) tetraacedic acid (EGTA). Preferably, the compositions have a pH between 6 and 12 and more preferably between 7 and 11.

Still another aspect of the present invention is a method of inducing systemic resistance in plants which comprises applying thereto the compositions discussed above.

Target plants to be protected within the scope of the present invention comprise, for example, the following species of plants: cereals (wheat, barley, rye, oats, rice, sorghum and related crops), beet (sugar beet and fodder beet), drupes, poms and soft fruit (apples, pears, plum, peaches, almonds, cherries, strawberries, raspberries and blackberries), leguminous plants (beans, lentils, peas and soybeans), oil plants (rape, mustard, poppy, olives, sunflowers, coconuts, castor oil plants, cocoa beans and ground nuts), cucumber plants (cucumber, marrows and melons), fiber plants (cotton, flax, hemp and jute), citrus fruit (oranges, lemon, grapefruits and mandarins), vegetables (spinach, lettuce, asparagus, cabbages, carrots, onions, tomatoes, potatoes and paprika), lauraceae (avocadoes, cinnamon and camphor) or plants such as maze, tobacco, nuts, coffee, sugar cane, tea, vines, hops, bananas and natural rubber plants, as well as ornamentals (composites), areas of grass, embankments or general low cover crops which counteract erosion or desiccation of the soil and are useful in cultures of trees and perennials (fruit plantations, hop plantations, maze fields, vineyards, etc.).

The compositions are in a form which may be readily applied to a plant, crop area or substrate to be treated either simultaneously or in succession with further compounds. These further compounds can be fertilizers and/or micro-nutrient donors or other preparations that influence plant growth. They can also be selective herbicides, fungicides, bactericides, nematicides, mollusicides or mixtures of several of these preparations, if desired together with further carriers, surfactants or application promoting adjuvants customarily employed in the art of formulation. Suitable carriers and adjuvants can be solid or liquid to correspond to the substances ordinarily employed in formulation technology, e.g. natural or degenerated mineral substances, solvents, dispersents, wedding agents, tackifiers, binders or fertilizers. Phospholipids are also useful formulation assistants.

The preferred method of applying a composition of the present invention is foliar application. The number of applications and the rate of application depend on the risk of infestation by a pathogen. However, in certain situations it may be possible for the compositions of the present invention to penetrate the plant through the roots via the soil by impregnating the locus of the plant with a liquid composition, or by applying the composition in solid form to the soil. Compositions of the present invention may also be applied to seeds by impregnating the seeds either with a liquid formulation containing the active ingredient or coating them with a solid formulation. In special cases, further types of application are also possible. These include selective treatment of plant stems or buds.

The compositions of the present invention are used in unmodified form or, preferably, together with the adjuvants conventionally employed in the art of formulation, and are therefore formulated in known manner to emulsifiable concentrates, coatable pastes, directly sprayable or dilutable solutions, dilute emulsions, wetable powders, soluble powders, dusts, granulates and also encapsulations in, for example, polymer substances. As with the nature of the compositions, the methods of application, such as spraying, atomizing, dusting, scattering or pouring are chosen in accordance with the intended objective and the prevailing circumstances. Advantageous rates of application are normally from .005 to .1 grams of active ingredient per plant and more preferably from .01 to .2 grams of active ingredient per plant. The compositions of the present invention and, where appropriate, a solid or liquid adjuvant are prepared in known manner. For example, the compositions may be prepared by homogeneously mixing and/or grinding the active ingredients with extenders such as solvents, solid carriers and, where appropriate, surface-active compounds (surfactants).

The compositions may also contain further ingredients such as stabilizers, viscosity regulators, binders, tackifiers as well as fertilizers or other active ingredients in order to obtain special effects.

The surfactants customarily employed in the art of formulation are described in a number of publications including "McCutcheon's Detergents and Emulsifiers Annual", MC Publishing Corp., Ringwood, New Jersey, 1981.

The agro-chemical compositions usually contain 0.1 to 99%, preferably 0.1 to 95%, of the active ingredient, 99.9 to 1%, preferably 99.8 to 5%, of a solid or liquid adjuvant, and 0 to 25%, preferably 0.1 to 25%, of a surfactant. whereas commercial products are preferably formulated as concentrates, the end user will normally employ dilute formulations.

The active ingredients of the compositions are generally known compounds and may be prepared by known procedures. Conventional methods of preparing compositions of the present invention may be exemplified as follows (throughout, percentages are by weight):

Example 1
—————

A ready for use dust is prepared by intimately mixing 2% of the active ingredient tripotassium phosphate with 1% highly dispersed silicic acid and 97% talcum.

## Example 2

A wetable powder is prepared by thoroughly mixing 25% of the active ingredient disodium phosphate with various adjuvants including 5% sodium lignosulfonate, 3% sodium laurylsulphate, 5% highly dispersed silicic acid and 62% kaolin. The mixture is thoroughly ground in a suitable mill to afford a wetable powder which may be diluted with water to give suspensions of the desired concentration.

## Example 3

An extruder granulate may be prepared by mixing and grinding 10% of an active ingredient potassium carbonate with various adjuvants including 2% sodium lignosulfonate, 1% carboxymethyl cellulose and 87% kaolin. The mixture is subsequently moistened with water, extruded and then dried in a stream of air.

## Example 4

A coated granulate may be prepared by uniformly applying 3% of a finely ground active ingredient EDTA in a mixer to 94% kaolin moistened with 3% polyethylene glycol 200 (mol wt). Non-dusty coated granulates are obtained in this manner.

## Example 5

An aqueous solution of 50mM disodium phosphate is prepared by dissolving an appropriate amount of disodium phosphate in water. Such a solution is suitable for spray application directly to the plant foliage.

## Example 6

A suspension concentrate is prepared by intimately mixing 25% of a finely ground active ingredient trisodium phosphate with various adjuvants including 10% ethylene glycol, 6% nonylphenol polyethylene glycol, 10% sodium lignosulfonate, 1% carboxymethyl cellulose, 0.2% 37% aqueous formaldehyde solution, 0.8% silicone oil in the form of a 75% aqueous emulsion and 47% water. This yields a suspension concentrate from which suspensions within a desired concentration may be obtained by further dilution with water.

The activity of the compositions of the present invention in inducing system resistance is exemplified in the following examples:

## Example 7

**Pathogen and host**. Colletotrichum lagenarium (Pass) Ell. & Halst. race 1 was maintained on green bean juice agar (215 ml of fluid from canned green beans, 285 ml of water, and 10 g of agar) at 21 C in the dark and transferred weekly. Seven-day-old cultures were used for the preparation of spore suspensions.

Cucumber (Cucumis sativus L.) cultivar Wisconsin SMR-58 was used in all experiments. Plants were grown in plastic pots (10 cm diameter) containing a 1:1 mixture of Canadian sphagnum peat moss and vermiculite supplemented with nutrients. A liquid fertilizer (Peter's 15-16-17, W. R. Grace and Co., Fogelsville, PA), containing 110 ppm nitrogen, was applied to the water, beginning when the first true leaf was fully open. Plants were grown at 23-33° C in a glass greenhouse receiving air filtered through activated charcoal during the summer. During the late autumn, winter and early spring, sunlight was supplemented with high-pressure sodium lights to maintain approximately a 14-hr photoperiod.

For tests of the persistence of induced resistance, cucumber seeds were either sown in the greenhouse as described or directly into 10-gal plastic pots containing a synthetic soil mix (Metromix-360, W. R. Grace and Co., Fogelsville, PA). The 10-gal plastic pots were arranged along a wire fence on a grass lawn outside of the greenhouse area. As the plants developed, they were trained to the fence. Plants growing outdoors were fertilized as described for greenhouse-grown plants. When plants reached the appropriate stage in the greenhouse and outdoors, they were inoculated or treated as subsequently described on leaves 1 and 2. Half of the greenhouse-grown plants were transferred to 10-gal plastic pots 1 wk after inoculation or treatment. As plants developed in the greenhouse, they were trained to suspended wires.

**Treatment with chemicals**. Plants (18-21 days old) with the first true leaf fully expanded and the second true leaf approximately two-thirds expanded (leaves 1 and 2) were used in all experiments. An aqueous solution or suspension of the chemical was prepared and the pH determined. The lower surfaces of leaves 1 and 2 were sprayed with 1-2 ml of the solution or suspension (50 mM unless stated otherwise) or water. To avoid contamination, other parts of the plant were covered. The treated plants were grown under greenhouse or outdoor conditions until challenged 7 days after treatment (unless stated otherwise) with a conidial suspension of C. lagenarium. In experiments to determine the duration of induced systemic resistance in the greenhouse and outdoors, 50 mM $K_2HPO_4$ solutions were sprayed weekly on the two youngest fully expanded leaves of some plants beginning 3 weeks after spraying leaves 1 and 2 (booster treatment).

**Inoculations**. Systemic resistance was induced by inoculating the upper surfaces of leaves 1 and 2 with 30-5ul drops of a conidial suspension ($10^6$ spores per milliliter of C. lagenarium. At the time of inoculation, the first leaf was fully expanded and the second leaf was approximately two-thirds expanded. Plants were challenged 7 days after induction by inoculating the upper surfaces of leaves 3 and 4 with 30-5 ul drops of a conidial suspension ($10^4$ spores per milliliter). After inoculations, plants were placed in a dark closed humidity chamber ( 100% RH) held at 22-25° C. After 24 hr, the chamber was partially opened, and after 48 hr the plants were transferred to the greenhouse. Plants receiving different treatments were randomly distributed in the humidity chamber.

In experiments to determine the duration of induced systemic resistance in the greenhouse and field, plants were induced by infiltrating 10 ul of a conidial suspension ($10^6$ spores per milliliter) into 30 locations on the upper surface of both leaves 1 and 2 with a 500-ul Eppendorf pipette. Placing infiltrated plants into humidity chambers was not necessary for the development of symptoms. In tests of the duration of induced systemic resistance, excised leaf halves with the midvein attached were challenged. The excised leaf halves were placed in plastic boxes containing moistened filter paper on the bottom of the box and were inoculated on the upper surfaces with 20 5-ul drops of a conidial suspension (0.5 x $10^4$ spores per milliliter).

**Assessment of induced resistance**. Induced systemic resistance was determined by counting the number of lesions, measuring the diameter of lesions, and calculating the area of lesions. The level of induced resistance was relative to symptoms on control plants treated with water. Plants induced with C. lagenarium or treated with potassium oxalate often served as positive controls to confirm that conditions for inducing systemic resistance were satisfactory. Lesions appeared 3-4 days after induction with C. lagenarium or challenge. Seven days after challenge, the maximum lesion development was usually evident, and data obtained at this time interval are reported in this paper. Lesions first appeared chlorotic, and by 4 or 5 days they developed a necrotic center. By 7 days after inoculation, the necrotic center usually filled >90% of the lesion area. The diameter of necrosis was measured since it was sharply delineated, whereas the chlorotic ring around the necrosis was thin and difficult to determine.

**RESULTS**

**Effect of different potassium salts**. Spraying solutions of potassium oxalate or $K_3PO_4$ on leaves 1 and 2 systemically induced resistance to anthracnose in leaves 3 and 4 (Table 1). Low level induced resistance was observed in leaves 3 and 4 after spraying leaves 1 and 2 with $K_2CO_3$.

Table 1.  Induction of systemic resistance in cucumber plants by foliar application of potassium salts that form insoluble calcium salts

| Treatment[a] | Leaf 3[b] Necrotic lesions (no.) | Leaf 4[b] Necrotic lesions (no.) |
|---|---|---|
| $H_2O$ | $20.8\pm2.6$[c] | $22.2\pm2.9$ |
| Colletotrichum lagenarium | $2.7\pm1.6$ | $7.0\pm1.5$ |
| $K_2C_2O_4$ | $10.2\pm2.8$ | $9.4\pm2.8$ |
| $K_2CO_3$ | $18.4\pm4.0$ | $16.2\pm4.6$ |
| $K_3PO_4$ | $7.4\pm2.5$ | $5.8\pm1.3$ |

[a]Approximately 1-2 ml of each salt (50mM) was sprayed on the undersides of the first two true leaves (leaves 1 and 2).  As positive controls, leaves 1 and 2 were each inoculated on the upper surface with 30-5 ul drops of a conidial suspension of C. lagenarium ($10^6$ spores per milliliter) or sprayed on the lower surface with potassium oxalate, as described.  As an additional control treatment, water was sprayed on the undersides of leaves 1 and 2.  Six or seven days after the treatment of leaves 1 and 2, plants were challenged on leaves 3 and 4 with 30 5-ul drops of a conidial suspension of C. lagenarium ($10^4$ spores per milliliter).
[b]The data represent the means of six plants per treatment per experiment, and the experiment was repeated five times.
[c]$\pm$Standard error.

Treatment with potassium oxalate caused a chlorotic stippling on leaves 1 and 2. The stippling often became necrotic and coalesced if solutions were applied at temperatures >30° C. White, water-insoluble crystals were formed on the lower leaf surface at the site of chlorotic or necrotic symptoms. Less damage was observed on leaves sprayed with $K_3PO_4$, and water-insoluble crystals were associated with symptoms.

**Effect of concentration of $K_3PO_4$ on induced resistance.** A solution of $K_3PO_4$ was sprayed on leaves 1 and 2 at concentrations ranging from 100 to 1mM. A positive correlation was evident between the amount of salt applied and the efficacy of induced systemic resistance (Table 2). The experiment was performed with two controls, water and potassium oxalate. The latter compound was previously reported as an inducer of resistance.

EP 0 445 867 A1

TABLE 2. Relationship between amount of phosphate applied to foliage and induced systemic resistance to anthracnose in cucumber

| Treatment[a] | Concentration (mM) | pH | Leaf 3[b] | | Leaf 4[b] | |
|---|---|---|---|---|---|---|
| | | | Necrotic lesions (no.) | Diameter of necrotic lesions (mm) | Necrotic lesions (no.) | Diameter of necrotic lesions (mm) |
| H2O | | 6.2 | 27.6 ± 0.7[c] | 2.6 ± 0.3 | 21.3 ± 0.5 | 4.0 ± 0.7 |
| Potassium oxalate | 50 | 7.3 | 10.2 ± 2.9 | 1.0 ± 0.5 | 9.4 ± 2.9 | 1.6 ± 0.6 |
| K3PO4 | 100 | 12.3 | 4.7 ± 1.5 | 0.4 ± 0.2 | 4.0 ± 2.0 | 0.8 ± 0.2 |
| | 50 | 11.7 | 6.3 ± 2.1 | 0.8 ± 0.2 | 5.8 ± 1.7 | 1.4 ± 0.3 |
| | 10 | 11.3 | 16.5 ± 2.5 | 1.4 ± 0.2 | 16.1 ± 1.0 | 2.0 ± 0.4 |
| | 5 | 10.3 | 25.0 ± 1.6 | 1.6 ± 0.2 | 19.6 ± 0.9 | 3.1 ± 0.3 |
| | 1 | 9.4 | 28.1 ± 0.9 | 2.4 ± 0.3 | 20.7 ± 0.6 | 3.9 ± 0.8 |

[a] See footnote a, Table 1.
[b] Data are the mean from three experiments with four plants per treatment per experiment.
[c] ± Standard error.

A significant decrease in the total necrotic lesion area was observed at 100-5mM $K_3PO_4$ based on the symptoms apparent on water controls. At a concentration of 50mM, $K_3PO_4$ was a more effective inducer of systemic resistance than potassium oxalate. Induced resistance was consistently associated with the appearance of chlorotic stippling or restricted necrosis on inducer leaves. Necrosis, however, was usually more severe, and occasionally coalesced, on the inducer leaves sprayed with potassium oxalate than on leaves sprayed with the other compounds.

**Effect of cation sources on induced resistance by phosphates.** Solutions or suspensions of $KH_2PO_4$, $K_2HPO_4$, $K_3PO_4$, $NaH_2PO_4$, $Na_2HPO_4$, $Na_3PO_4$, $CaHPO_4$ and potassium oxalate were sprayed on leaves 1 and 2 and induced resistance was determined in leaves 3 and 4 as described earlier. Potassium oxalate, $K_2HPO_4$, $K_3Po_4$, $NaHPO_4$, $Na_3PO_4$ and $CaHPO_4$ were highly effective inducers of systemic resistance; $KH_2PO_4$ and $NaH_2PO_4$ were less effective. Solutions of $K_2HPO_4$, $K_3PO_4$ and $Na_3PO_4$ were more effective than potassium oxalate.

TABLE 3. Effect of cation source on induction by phosphates of systemic resistance to anthracnose in cucumber

| Treatment[a] | pH | Leaf 3[b] | | Leaf 4[b] | |
|---|---|---|---|---|---|
| | | Necrotic lesions (no.) | Diameter of necrotic lesions (mm) | Necrotic lesions (no.) | Diameter of necrotic lesions (mm) |
| H2O | 6.2 | 23.5 ± 1.4[c] | 2.3 ± 0.2 | 21.2 ± 1.6 | 2.5 ± 0.3 |
| Potassium oxalate | 7.3 | 9.2 ± 2.1 | 1.1 ± 0.2 | 11.4 ± 2.6 | 1.3 ± 0.3 |
| KH2PO4 | 4.3 | 13.7 ± 2.3 | 2.6 ± 0.4 | 17.5 ± 3.7 | 2.3 ± 0.4 |
| K2HPO4 | 9.0 | 3.9 ± 1.0 | 0.6 ± 0.1 | 3.7 ± 1.1 | 0.4 ± 0.2 |
| K3PO4 | 11.7 | 8.5 ± 1.1 | 1.1 ± 0.4 | 6.2 ± 1.7 | 1.0 ± 0.5 |
| NaH2PO4 | 4.8 | 19.8 ± 1.8 | 1.9 ± 0.4 | 14.8 ± 1.8 | 1.0 ± 0.2 |
| Na2HPO4 | 9.0 | 1.8 ± 0.6 | 0.5 ± 0.2 | 1.0 ± 0.5 | 0.3 ± 0.2 |
| Na3PO4 | 11.7 | 1.8 ± 0.7 | 0.5 ± 0.2 | 1.5 ± 0.6 | 0.2 ± 0.1 |
| CaHPO4 | 7.2 | 10.4 ± 0.9 | 1.0 ± 0.1 | 10.2 ± 1.1 | 1.0 ± 0.1 |
| C. lagenarium | | 2.7 ± 1.4[c] | 0[d] | 1.7 ± 1.0[c] | 0[d] |

[a] See footnote a, Table 1.
[b] The data are the mean of five experiments, six plants per treatment per experiment.
[c] ± Standard error.
[d] Only chlorotic lesions 0.5 mm or less in diameter were observed.

**Effect of pH on induced resistance.** In one series of experiments, the effect of pH of the solution applied on induced systemic resistance was studied with 50mM dipotassium phosphate at pH values ranging from 3 to 9, along with water, 50 mM potassium chloride, and 50 mM KOH at pH values of 6.1, 6.5 and 11.7, respectively (Table 4). The pH values of $K_2HPO_4$ solutions were adjusted with HCl to 3.0, 5.0 and 7.0. Induced systemic resistance in leaves 3 and 4 and chlorotic stippling of leaves 1 and 2 were evident with $K_2HPO_4$ when the pH was at or greater than 7.0. A solution of $K_2HPO_4$ at pH 3 and 5 caused little or no damage on the inducer leaves and induced little or no resistance. Solutions of KCl and KOH produced little or no stippling on the inducer leaves at the concentrations applied and did not induce systemic resistance.

TABLE 4. Effect of pH on the ability of solutions of dipotassium phosphate to induce systemic resistance to anthracnose in cucumber

| Treatment[a] | pH | Leaf 3[b] | | Leaf 4[b] | |
|---|---|---|---|---|---|
| | | Necrotic lesions (no.) | Diameter of necrotic lesions (mm) | Necrotic lesions (no.) | Diameter of necrotic lesions (mm) |
| $H_2O$ | 6.1 | 26.2 ± 1.4[d] | 2.1 ± 0.2 | 22.7 ± 1.6 | 1.7 ± 0.2 |
| $K_2HPO_4$ | 3.0[c] | 25.3 ± 1.6 | 1.9 ± 0.2 | 21.5 ± 2.0 | 1.5 ± 0.2 |
| | 5.0[c] | 25.7 ± 0.8 | 1.8 ± 0.3 | 20.5 ± 1.8 | 1.1 ± 0.2 |
| | 7.0[c] | 21.2 ± 0.9 | 1.3 ± 0.3 | 15.5 ± 1.8 | 0.8 ± 0.2 |
| | 9.0 | 6.5 ± 1.1 | 0.8 ± 0.1 | 3.7 ± 1.1 | 0.5 ± 0.1 |
| KCl | 6.5 | 26.2 ± 1.1 | 2.0 ± 0.3 | 21.7 ± 1.3 | 1.4 ± 0.2 |
| KOH | 11.7 | 27.2 ± 1.2 | 2.8 ± 0.4 | 20.5 ± 1.6 | 1.8 ± 0.3 |

[a] See footnote a, Table 1.
[b] Data are the mean for three experiments, six plants per treatment per experiment.
[c] The pH was adjusted with HCl.
[d] ± Standard error.

In a second series of experiments, aqueous solutions of 50mM $KH_2PO_4$, $K_2HPO_4$, $K_3PO_4$, or potassium oxalate were adjusted to pH 6.0 with either potassium hydroxide or hydrochloric acid. A decrease of the pH for $K_2HPO_4$ and $K_3PO_4$ (from 9.0 and 11.7, respectively) resulted in a decrease in their ability to induce systemic resistance (Table 5). The highest level of induced resistance was observed for $K_2HPO_4$ and $K_3PO_4$ without adjustment to pH 6.0. A solution of $KH_2PO_4$ alone or adjusted to pH 6.0 induced little or no resistance. Potassium oxalate at a pH of 6.0 induced resistance. The water sprayed on leaves for the controls had a pH of 6.1.

TABLE 5. Effect of potassium phosphates adjusted to pH 6.0 on induced systemic resistance to anthracnose in cucumber

| Treatment[a] | pH | Leaf 3[b] | | Leaf 4[b] | |
|---|---|---|---|---|---|
| | | Necrotic lesions (no.) | Diameter of necrotic lesions (mm) | Necrotic lesions (no.) | Diameter of necrotic lesions (mm) |
| $H_2O$ | 6.1 | 20.2 ± 2.8[c] | 2.1 ± 0.2 | 19.2 ± 1.6 | 1.5 ± 0.1 |
| $KH_2PO_4$ | 4.3 | 18.2 ± 1.8 | 1.8 ± 0.1 | 18.0 ± 1.4 | 1.3 ± 0.1 |
| $K_2HPO_4$ | 9.0 | 3.5 ± 0.8 | 0.5 ± 0.1 | 3.1 ± 1.0 | 0.4 ± 0.2 |
| $K_3PO_4$ | 11.7 | 5.2 ± 0.9 | 0.8 ± 0.3 | 4.1 ± 0.9 | 0.9 ± 0.2 |
| Potassium oxalate[d] | 6.0 | 10.0 ± 2.9 | 1.4 ± 0.2 | 10.5 ± 1.7 | 1.1 ± 0.1 |
| $KH_2PO_4$[e] | 6.0 | 18.8 ± 2.3 | 2.3 ± 0.5 | 16.3 ± 3.9 | 1.1 ± 0.3 |
| $K_2HPO_4$[e] | 6.0 | 21.2 ± 3.5 | 1.8 ± 0.1 | 20.7 ± 4.3 | 1.1 ± 0.3 |
| $K_3PO_4$[e] | 6.0 | 18.0 ± 2.1 | 1.9 ± 0.2 | 19.8 ± 3.5 | 1.1 ± 0.2 |

[a] See footnote a, Table 1.
[b] Data are the mean for three experiments, six plants per treatment per experiment.
[c] ± Standard error.
[d] Adjusted to pH 6.0 with HCl.
[e] Adjusted to pH 6.0 with KOH.

**Duration of induced systemic resistance.** Lesions on leaves infiltrated with conidia were indistinguishable from those formed on leaves inoculated with drops on the upper leaf surface, and lesions appeared in 3 or 4 days. Systemic resistance induced by C. lagenarium and $K_2HPO_4$ was evident in newly developed leaves for at least 5 wk after induction of resistance in greenhouse and outdoor tests (Table 6). Plants induced in the greenhouse and grown in the greenhouse were generally more effectively protected than those induced in the greenhouse and transplanted outdoors. Applying a booster inoculation of phosphate during this period did not significantly enhance induced resistance (data not shown).

TABLE 6. Duration of systemic resistance to anthracnose in cucumber induced by inoculation with *Colletotrichum lagenarium* or treatment with dipotassium phosphate in greenhouse and outdoor tests

| Treatment[a] | Time after induction of resistance (wk) | Percent Protection | | |
|---|---|---|---|---|
| | | Greenhouse[b] | Greenhouse-Outdoors[b] | Outdoors[b] |
| C. lagenarium | 1 | 98 | 93 | 90 |
| | 3 | 95 | 91 | 89 |
| | 4 | 98 | 80 | 86 |
| | 5 | 96 | 89 | 85 |
| $K_2HPO_4$ | 1 | 98 | 74 | 70 |
| | 3 | 78 | 69 | 74 |
| | 4 | 97 | 90 | 87 |
| | 5 | 96 | 89 | 85 |

[a] See Materials and Methods section of text for description of method of induction and challenge.
[b] Data reported are for a single experiment. six plants per treatment. The percent protection is based on the area of necrosis of plants treated with water. Data are from plants induced and grown in the greenhouse. induced in the greenhouse and grown outdoors, and induced and grown outdoors.

Example 8

Approximately 25 day old watermelon plants with the first two leaves expanded are sprayed with 1-2 ml of a 100 mM solution of tripotassium phosphate or water as a control. The treated plants are grown under greenhouse conditions as defined in example 7 above until challenged seven days after treatment with a conidial suspension of C. lagenarium. The tripotassium phosphate treatment induces systemic resistance in the plants comparable to that observed for cucumber as set forth in example 7.

Example 9

Approximately 25 day old muskmelon plants with the first two leaves expanded are sprayed with 1-2 ml of a 100 mM solution of trisodium phosphate or water as a control. The treated plants were grown under greenhouse conditions as defined in example 7 above until challenged seven days after treatment with a conidial suspension of C. lagenarium. The tripotassium phosphate treatment induces systemic resistance in the plants comparable to that observed for cucumber as set forth in example 7.

Example 10

Tomato plants are dusted with the compositions of example 1 as set forth above so as to apply between .01 and 0.2 grams of the active ingredient, tripotassium phosphate, to each plant. After five days, the plants are then infected with cucumber mosaic virus. Evaluation of the induced systemic resistance of the plants to the virus is made after incubation of the infested plants in a dark closed humidity chamber (100% RH) held at 22-25° C for two day and transfer of the plants to a greenhouse for five additional days.

Example 11

Mature green bean plants are dusted with a ready to use dust (comprising 2% of the active ingredient EDTA, 97% talcum and 1% silicic acid) so as to apply between .01 and 0.2 grams of the active ingredient to each plant. After seven days, the plants are infected with common blight (Xanthomonas phaseoli). After being infected, the plants are placed in a dark, closed humidity chamber (100% RH) held at 22-25° C. After 24 hours, the chamber is partially opened and after 48 hours, the plants are transferred to a greenhouse. Evaluation of the induced systemic resistance of the plants to the bacterial wilt is made after seven days.

In summary, numerous benefits have been described which result from employing the concepts of the present invention. A novel composition including an effective amount of an active ingredient selected from a group of compounds consisting of mono, di and tri potassium phosphate, mono, di and tri sodium phosphate, calcium phosphate, potassium carbonate, sodium carbonate and chelated calcium compounds including calcium chelated with EDTA and EGTA is provided. Each of the compositions are useful in a method for inducing systemic resistance in plants. Advantageously, the compositions serve to sensitize the plants to respond rapidly after infection by a large variety of phytopathogenic microorganisms including fungi, bacteria and virus. As a further advantage, the induced systemic resistance is evident for a period of at least 5 weeks after initial treatment, thereby limiting the number of reapplications of the compositions required during the growing period. Further, it should be appreciated that the active ingredients in the compositions at the required concentrations to provide the desired activity are environmentally safe. They are also relatively inexpensive to produce and may be easily incorporated with appropriate adjuvants and carriers into useable compositions for the treatment of plants.

The invention has been described herein with reference to certain preferred embodiments. However, as obvious variations thereon become apparent to those skilled in the art, the invention is not to be considered as limited thereto.

**Claims**

1. A composition for inducing systemic resistance in plants being characterized by having as an active ingredient an effective amount of a compound selected from a group consisting of calcium chelating compounds including EDTA and EGTA and any mixtures thereof, together with a suitable carrier.

2. A composition according to Claim 1 including a pH between 6 and 12.

3. A composition as set forth in Claim 1 including a pH between 7 and 11.

4. A method of inducing systemic resistance in plants being characterized by applying to the plants an effective amount of an active ingredient selected from a group consisting of calcium chelating compounds including EDTA and EGTA and any mixtures thereof, together with a suitable carrier.

5. The method according to Claim 4 wherein from 0.005 to 0.1 grams of active ingredient is applied to each plant being treated.

6. The method according to Claim 4, wherein the sensitizing of plants to respond rapidly after infections is maintained by reapplying the active ingredient to the plants between 5 and 10 weeks after a previous application.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 836 537   (J.B. SKAPTASON)<br>* Column 1, lines 15-55; claims 1,4 * | 1-6 | A 01 N 37/44<br>A 01 N 59/26 |
| X | FR-A-1 578 111   (Ch. LOUVET)<br>* Page 1, lines 1-10; page 1, line 33 - page 2, line 11; claims * | 1-6 | |
| X | CHEMICAL ABSTRACTS, vol. 109, no. 15, 10th October 1988, page 405, abstract no. 126033a, Columbus, Ohio, US; N.S. DOUBRAVA et al.: "Induction of systemic resistance to anthracnose caused by Colletotrichum lagenarium in cucumber by oxalate and extracts from spinach and rhubarb leaves",<br>& PHYSIOL. MOL. PLANT PATHOL. 1988, 33(1), 69-79 | 1-6 | |
| X | CHEMICAL PATENTS INDEX, DOCUMENTATION ABSTRACTS JOURNAL, section C, AGDOC, 3rd January 1990, accession no. 89-320708/44, Derwent Publications Ltd, London, GB;<br>& JP-A-1 239 077 (KATAKURA CHIKKARIN) 25-09-1989<br>* Whole abstract * | 1-6 | |
| X | WPI, FILE SUPPLIER, accession no. 73-43981U [31], Derwent Publications Ltd, London, GB;<br>& JP-B-48 025 486 (SANKYO CO., LTD) 1973 | 1-6 | **TECHNICAL FIELDS SEARCHED (Int. Cl.5)**<br><br>A 01 N |
| P,X | GB-A-2 224 209   (CHISSO CORP.)<br>* Page 1, lines 1-15; page 3, paragraph 2 - page 4, line 3 * | 1-6 | |
| A | WO-A-8 911 795   (D.M. NORRIS)<br>* Page 1 - page 6, line 11 * | 1-6 | |

$-/-$

The present search report has been drawn up for all claims

| Place of search | Date of completion of search | Examiner |
|---|---|---|
| The Hague | 13 June 91 | MUELLNERS W. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | BIOCHEMICAL SOCIETY TRANSACTIONS, vol. 16, no. 6, December 1988, pages 1069-1070, London, GB; C.J. SMITH et al.: "Plant host-pathogen interaction: elicitation of phenylalanine ammonia lyase activity and its mediation by $Ca2+$" <br> * The whole article * | 1-6 | |
| A | VIROLOGY, vol. 12, no. 4, 1960, pages 603-606, New York, US; N.C. CROWLEY et al.: "The infection of apical meristems of tomato roots with tobacco mosaic virus after treatment with ethylenediaminetetraacetic acid" <br> * The whole article * | 1-6 | |
| A | PLANT PHYSIOLOGY, vol. 84, no. 2, 1987, pages 520-525, MD, US; M.N. ZOOK et al.: "A role for $Ca2+$ in the elicitation of rishitin and lubimin accumulation in potato tuber tissue" <br> * The whole article * | 1-6 | |
| A | CHEMICAL ABSTRACTS, vol. 75, no. 5, 2nd August 1971, page 134, abstract no. 31431u, Columbus, Ohio, US; A. KOZLOWSKA: "Effect of factors stimulating virus multiplication in resistant and susceptible tobacco varieties", & ZESZ. PROBL. POSTEPOW NAUK ROLN. 1971, no. 111, 103-10 <br> * Abstract * | 1-6 | TECHNICAL FIELDS SEARCHED (Int. Cl.5) |

The present search report has been drawn up for all claims

| Place of search | Date of completion of search | Examiner |
|---|---|---|
| The Hague | 13 June 91 | MUELLNERS W. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document